# EUROPEAN PATENT APPLICATION

(11) **EP 4 520 515 A1**
(43) Date of publication of application: **12.03.2025**
(21) Application number: 23927083.8
(22) Date of filing: 12.10.2023
(51) Int. Cl.: B29D 30/06

(54) **QUICK REPLACEMENT DEVICE FOR VULCANIZER PCI CHUCK**

(30) Priority: 16.03.2023 CN 202320510057 U
(71) Applicant: Arp Technologies (Suzhou) Co., Ltd., Suzhou, Jiangsu 215216 (CN)
(72) Inventor: LIU, Baolong, Suzhou, Jiangsu 215216 (CN)
(74) Representative: Gill Jennings & Every LLP
(86) International application number: PCT/CN2023/124256
(87) International publication number: WO 2024/187739

(57) **Abstract**

Provided is a device for quickly replacing a vulcanizer PCI chuck mounted on a vulcanizer PCI bracket. The device includes a chuck, a chuck seat, and a compression assembly. The chuck is provided with a groove and a first protrusion and detachably disposed on the chuck seat. The compression assembly includes a rotary shaft disposed in the chuck seat and a compression plate connected to an end of the rotary shaft. The compression plate is provided with a second protrusion, and the chuck is disposed between the chuck seat and the compression plate.

## Description

This application claims priority to Chinese Patent Application No. 202320510057.0 filed on Mar. 16, 2023, the disclosure of which is incorporated herein by reference in its entirety.

### TECHNICAL FIELD

The present application relates to the technical field of vulcanizing machines, for example, a device for quickly replacing a vulcanizer PCI chuck.

### BACKGROUND

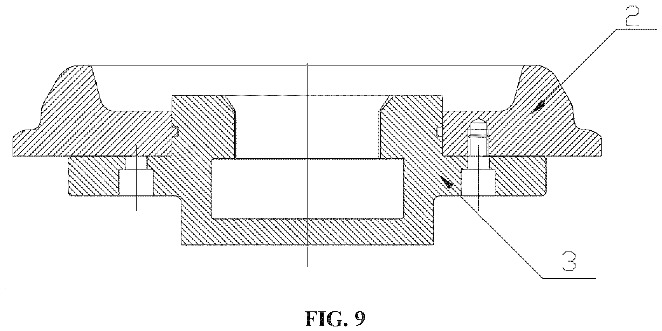

In industrial production, the vulcanizer PCI (post curing inflator, PCI) is used for vulcanizing and shaping tires. When different types of tires are produced, different chucks need to be replaced so as to inflate the tires. In the related art, the chuck and the chuck seat are generally fixed using screws (as shown in FIG. 9), the replacement is troublesome, and manual disassembly is required, which is time-consuming and labor-intensive, easily causing damage to the chuck.

### SUMMARY

The present application provides a device for quickly replacing a vulcanizer PCI chuck that can quickly separate a chuck from a chuck seat so that quick chuck replacement is achieved, the disassembly time is reduced, and the machining efficiency of the device is improved.

An embodiment of the present application discloses a device for quickly replacing a vulcanizer PCI chuck mounted on a vulcanizer PCI bracket. The device includes a chuck, a chuck seat, and a compression assembly. The chuck is provided with a groove and a first protrusion and detachably disposed on the chuck seat. The compression assembly includes a rotary shaft disposed in the chuck seat and a compression plate connected to an end of the rotary shaft. The compression plate is provided with a second protrusion, and the chuck is disposed between the chuck seat and the compression plate.

### BRIEF DESCRIPTION OF DRAWINGS

FIG. 1 is a schematic view of the overall structure of a device for quickly replacing a vulcanizer PCI chuck according to an embodiment of the present application;
FIG. 2 is a structural view illustrating that an upper chuck and a lower chuck are separated according to an embodiment of the present application;
FIG. 3 is an enlarged view of position I according to the present application;
FIG. 4 is a top view according to the present application;
FIG. 5 is a top view of a compression plate according to an embodiment of the present application;
FIG. 6 is a structural view of a chuck according to an embodiment of the present application;
FIG. 7 is a schematic view of an inclined-surface compression structure according to an embodiment of the present application;
FIG. 8 is a sectional view of position A according to the present application; and
FIG. 9 is a schematic view of the mounting structure of a chuck and a chuck seat according to the related art of the present application.

### Reference list

- 1: vulcanizer PCI bracket
- 11: groove
- 12: first protrusion
- 2: chuck
- 21: pinhole
- 22: positioning hole
- 23: upper chuck
- 24: lower chuck
- 3: chuck seat
- 32: chuck positioning pin
- 4: rotary shaft
- 41: drive cylinder
- 42: connecting rod
- 43: upper rotary shaft
- 44: lower rotary shaft
- 45: locking head
- 46: locking port
- 5: compression plate
- 51: second protrusion
- 52: mounting groove
- 53: positioning pin
- 54: spring

### DETAILED DESCRIPTION

The present application is further described in detail in conjunction with the drawings.

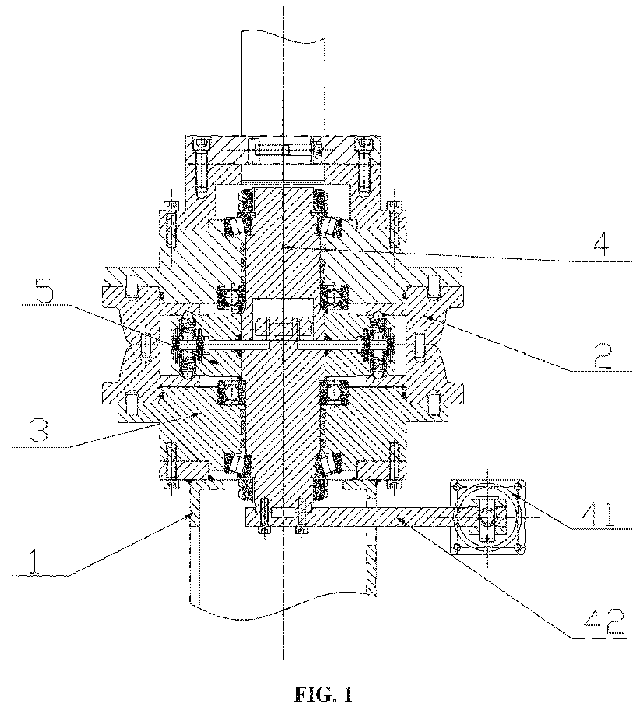

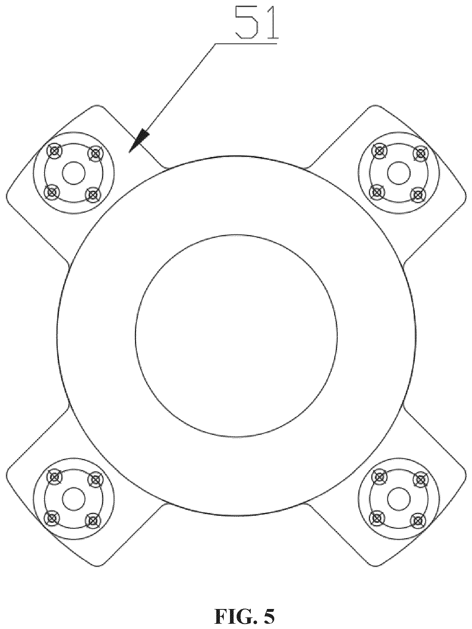

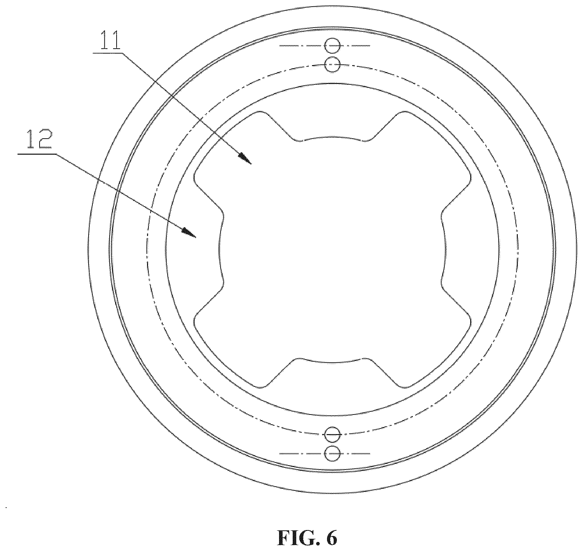

As shown in FIGS. 1 to 7, the present application discloses a device for quickly replacing a vulcanizer PCI chuck mounted on a vulcanizer PCI bracket 1. The device includes a chuck 2, a chuck seat 3, and a compression assembly. The chuck 2 is provided with a groove 11 and a first protrusion 12. The chuck 2 is detachably disposed on the chuck seat 3. The compression assembly includes a rotary shaft 4 disposed in the chuck seat 3. A compression plate 5 is connected to an end of the rotary shaft 4, and the compression plate 5 and the rotary shaft 4 are welded and fixed. The compression plate 5 is provided with a second protrusion 51, and the chuck 2 is disposed between the chuck seat 3 and the compression plate 5.

The advantage of adopting the preceding technical solution is as follows: the compression plate 5 is provided to fix the chuck 2 on the chuck seat 3, and the rotary shaft 4 is provided to drive the compression plate 5 to rotate; when the compression plate 5 is rotated to the point that the second protrusion 51 on the compression plate 5 corresponds to the first protrusion 12 on the chuck 2, the compression plate 5 presses the chuck 2 on the chuck seat 3; when the compression plate 5 is rotated to the point that the second protrusion 51 on the compression plate 5 corresponds to the groove 11 on the chuck 2, the compression plate 5 is not in contact with the chuck 2 so that the chuck 2 may be removed directly without manual disassembly. In this manner, the time for replacing the chuck 2 is reduced. Compared with the screw connection manner, the damage to the chuck 2 during replacement is reduced, and the machining efficiency of the device is improved.

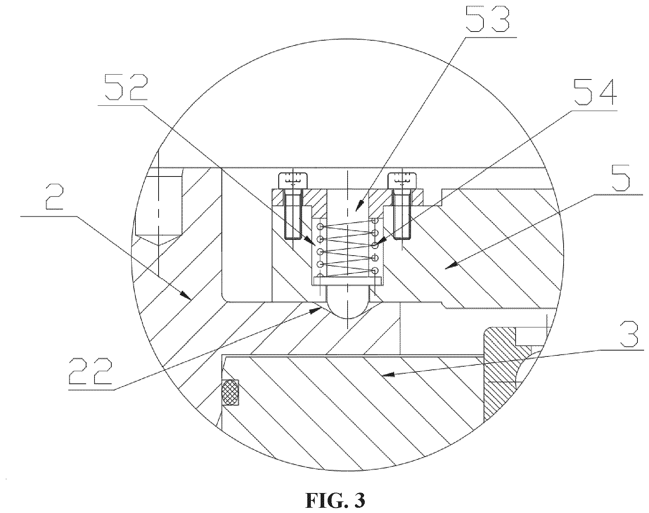

In some embodiments, the compression plate 5 may adopt the structural solution described below. As shown in FIG. 3, a side surface of the compression plate 5 in contact with the chuck 2 is provided with mounting grooves 52, a positioning pin 53 is disposed in the mounting groove 52, a spring 54 is sleeved on the positioning pin 53, an end of the positioning pin 53 protrudes from the mounting groove 52, the chuck 2 is provided with a positioning hole 22, a baffle is disposed at an end of the positioning pin 53 facing the chuck 2, the baffle is fixedly connected to the top end of the positioning pin 53, the baffle is movable in the mounting groove 52, and an end of the spring 54 abuts against the baffle.

The advantage of adopting the preceding technical solution is as follows: when the compression plate 5 and the chuck 2 are mounted, the positioning pin 53 extends into the positioning hole 22 to prevent the chuck 2 and the compression plate 5 from sliding relative to each other, and the spring 54 is provided to facilitate the movement of the positioning pin 53.

In some embodiments, the positioning hole 22 may adopt the following structural solution: a side surface of the positioning hole 22 is an inclined transition surface, and an end section of the positioning pin 53 is semicircular.

The advantage of adopting the preceding technical solution is that when disassembly is required, the compression plate 5 is rotated, and the positioning pin 53 moves along the transition surface of the positioning hole 22 to the surface of the chuck 2 so that the positioning pin 53 comes out from the positioning hole 22. The top of the positioning pin 53 is smooth, which prevents the positioning pin 53 from catching in the positioning hole 22.

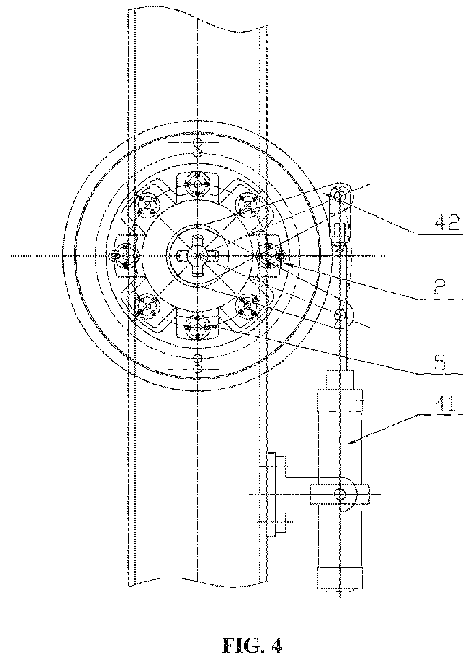

In some embodiments, as shown in FIG. 4, the rotary shaft 4 may adopt the structural solution described below. The rotary shaft 4 is connected to a rotary drive assembly. The rotary drive assembly includes a drive cylinder 41 and a connecting rod 42, the connecting rod 42 is fixedly connected to the rotary shaft 4 through screws. A cylinder body of the drive cylinder 41 is hinged with the vulcanizer PCI bracket 1. An output end of the drive cylinder 41 is connected to a first end of the connecting rod 42, a second end of the connecting rod 42 is connected to the rotary shaft 4, and the connecting rod 41 is configured to rotate around the rotary shaft 4.

The advantage of adopting the preceding technical solution is as follows: an extended end of the drive cylinder 41 is connected to the connecting rod 42 and drives the connecting rod 42 to move, and then the connecting rod 42 drives the rotary shaft 4 to rotate; further, the rotary shaft 4 drives the compression plate 5 to rotate, and then the chuck 2 can be directly removed from the chuck seat 3 without manual disassembly.

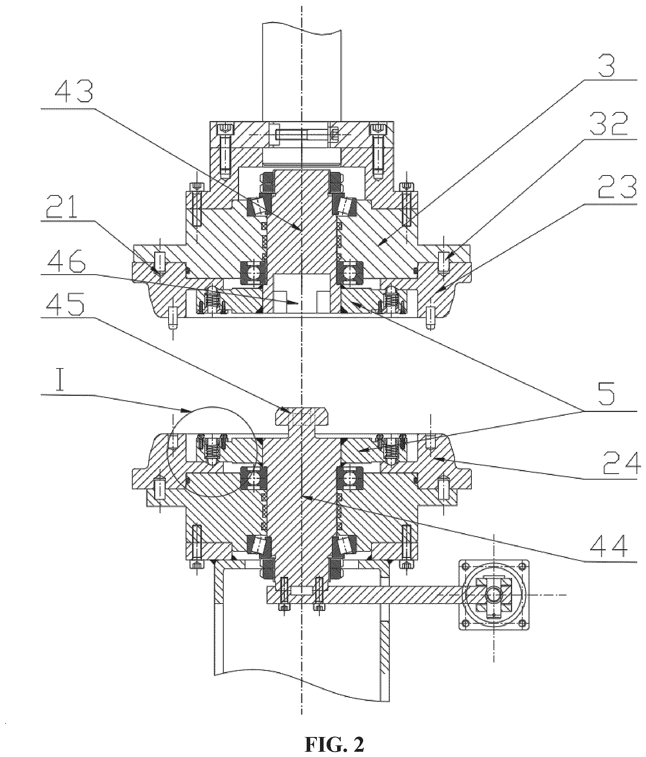

In some embodiments, as shown in FIG. 2, the chuck seat 3 may adopt the following structural solution: the chuck seat 3 is provided with a chuck positioning pin 32, and the chuck 2 is provided with a pinhole 21 at a position corresponding to a position of the chuck positioning pin 32.

The advantage of adopting the preceding technical solution is that the chuck positioning pin 32 provided on the chuck seat 3 is mating with the pinhole 21 on the chuck 2, thereby preventing the chuck 2 from rotating during use and affecting the machining of the product.

In some embodiments, the chuck 2 includes an upper chuck 23 and a lower chuck 24. The rotary shaft 4 may adopt the structural solution described below. The rotary shaft 4 includes an upper rotary shaft 43 and a lower rotary shaft 44. The upper rotary shaft 43 is disposed in the upper chuck 23. The lower rotary shaft 44 is disposed in the lower chuck 24. Each of the upper rotary shaft 43 and the lower rotary shaft 44 is provided with a compression plate 5 and is fixed to the compression plate 5. The compression plate 5 on the upper rotary shaft 43 and the compression plate 5 on the lower rotary shaft 44 fix the upper chuck 23 and the lower chuck 24 arranged in a pair. A locking head 45 is disposed at an end of the lower rotary shaft 44, a locking port 46 is disposed on the upper rotary shaft 43, and the locking head 45 mates with the locking port 46. A T-shaped protrusion protruding toward the locking port 46 is disposed at an end of the locking head 45, and a T-shaped groove is disposed in the locking port 46. When the locking head 45 extends into the locking port 46, the cross protrusion mates with the cross groove to achieve the connection and synchronous rotation of the upper rotary shaft 43 and the lower rotary shaft 44.

The advantage of adopting the preceding technical solution is that the locking head 45 and the locking port 46 mate to achieve the connection and fixation between the upper rotary shaft 43 and the lower rotary shaft 44, and then the upper rotary shaft 43 and the lower rotary shaft 44 are driven to rotate synchronously just by the drive cylinder 41 so that the upper chuck 23 and the lower chuck 24 can be disassembled, thereby simplifying the drive structure and reducing the machining cost.

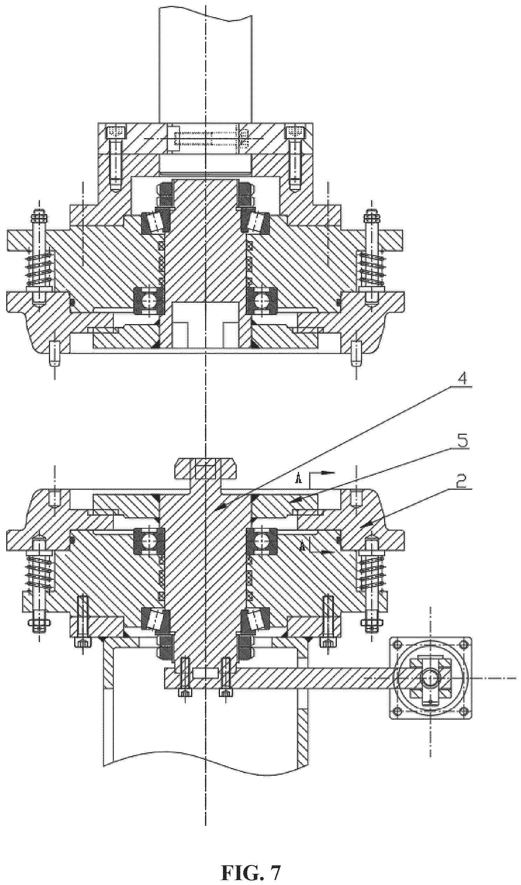

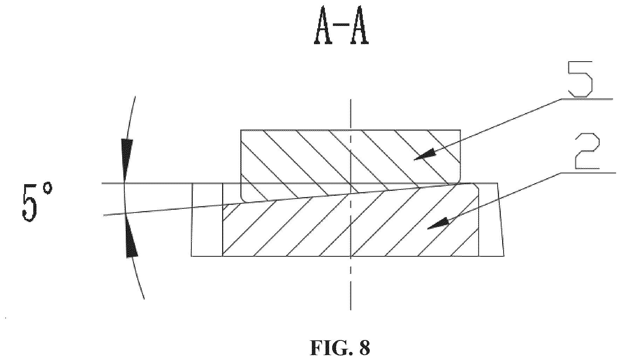

In some embodiments, the chuck 2 may adopt the structural solution described below. As shown in FIGS. 7 and 8, the angle of inclination of the side surface of the chuck 2 in contact with the compression plate 5 is the same as the angle of inclination of the side surface of the compression plate 5 in contact with the chuck 2.

The advantage of adopting the preceding technical solution is as follows: the chuck 2 and the compression plate 5 are each provided with an inclined surface so that when the compression plate 5 is driven by the rotary shaft 4 to rotate, the two inclined surfaces contact with each other and compress the chuck 2, preventing the chuck 2 from rotating, thereby implementing the compression self-locking function and preventing the chuck 2 from rotating during machining.

In some embodiments, the drive cylinder 41 may adopt the following structural solution: the drive cylinder 41 is disposed horizontally.

The advantage of adopting the preceding technical solution is that the horizontally disposed drive cylinder 41 drives an end of the connecting rod 42 to reciprocate horizontally, and the rotary shaft 4 connected to the connecting rod 42 rotates, thereby further driving the compression plate 5 to rotate.

In the working process, when the chuck 2 needs to be replaced, first, the upper chuck 23 is driven by the vulcanizing machine to come into contact with the lower chuck 24; at this time, the locking head 45 on the lower rotary shaft 44 extends into the locking port 46, and then the drive cylinder 41 protrudes and drives the rotary shaft 4 to rotate; at this time, the compression plate 5 rotates, and the second protrusion 51 on the compression plate 5 rotates from the first protrusion 12 on the chuck 2 to the groove 11; at this time, the compression plate 5 is not in contact with the chuck 2, the upper chuck seat 3 rises with the vulcanizing machine, the chuck 2 on the upper chuck seat 3 and the chuck 2 on the lower chuck seat 3 can be taken down to replace new chucks 2; then the upper chuck seat 3 descends with the vulcanizing machine, the drive cylinder 41 retracts, and the compression plate 5 rotates in reverse to re-compress the new chucks 2, thereby completing the replacement.

## Claims

1. A device for quickly replacing a vulcanizer post curing inflator (PCI) chuck, mounted on a vulcanizer PCI bracket (1), the device comprising:
a chuck seat (3);
a chuck (2) provided with a groove (11) and a first protrusion (12) and detachably disposed on the chuck seat (3); and
a compression assembly comprising a rotary shaft (4) disposed in the chuck seat (3) and a compression plate (5) connected to an end of the rotary shaft (4), wherein the compression plate (5) is provided with a second protrusion (51), and the chuck (2) is disposed between the chuck seat (3) and the compression plate (5).

2. The device for quickly replacing a vulcanizer PCI chuck of claim 1, wherein the chuck (2) is provided with a positioning hole (22), a side surface of the compression plate (5) in contact with the chuck (2) is provided with a mounting groove (52), a positioning pin (53) is disposed in the mounting groove (52), a spring (54) is sleeved on the positioning pin (53), and an end of the positioning pin (53) is configured to protrude from the mounting groove (52) and slide into the positioning hole (22).

3. The device for quickly replacing a vulcanizer PCI chuck of claim 2, wherein a side surface of the positioning hole (22) is an inclined transition surface.

4. The device for quickly replacing a vulcanizer PCI chuck of claim 1, wherein the rotary shaft (4) is connected to a rotary drive assembly, the rotary drive assembly comprises a drive cylinder (41) and a connecting rod (42), the drive cylinder (41) is fixed on the vulcanizer PCI bracket (1), an output end of the drive cylinder (41) is connected to a first end of the connecting rod (42), and a second end of the connecting rod (42) is connected to the rotary shaft (4).

5. The device for quickly replacing a vulcanizer PCI chuck of claim 1, wherein the chuck seat (3) is provided with a chuck positioning pin (32), and the chuck (2) is provided with a pinhole (21) at a position corresponding to a position of the chuck positioning pin (32).

6. The device for quickly replacing a vulcanizer PCI chuck of claim 1, wherein the rotary shaft (4) comprises an upper rotary shaft (43) and a lower rotary shaft (44), a locking head (45) is disposed at an end of the lower rotary shaft (44), a locking port (46) is disposed on the upper rotary shaft (43), and the locking head (45) mates with the locking port (46).

7. The device for quickly replacing a vulcanizer PCI chuck of claim 1, wherein an angle of inclination of a side surface of the chuck (2) in contact with the compression plate (5) is the same as an angle of inclination of a side surface of the compression plate (5) in contact with the chuck (2).
